# FASCICULE DE BREVET EUROPEEN

(11) **EP 3 870 806 B1**
(45) Date de publication et mention de la délivrance du brevet: **30.09.2026**
(21) Numéro de dépôt: 19813924.8
(22) Date de dépôt: 10.10.2019
(51) Int. Cl.: F01D 5/02, F01D 15/10, F02C 7/36, F02C 7/268, F02C 7/32

(54) **TURBOMACHINE D'AERONEF EQUIPEE D'UNE MACHINE ELECTRIQUE**
FLUGZEUGTURBOMASCHINE AUSGERÜSTET MIT EINER ELEKTRISCHEN MASCHINE
AIRCRAFT TURBOMACHINE EQUIPPED WITH AN ELECTRICAL MACHINE

(30) Priorité: 26.10.2018 FR 1859941
(43) Date de publication de la demande: 01.09.2021
(73) Titulaire: SAFRAN AIRCRAFT ENGINES, 75015 Paris (FR)
(72) Inventeur: CHARIER, Gilles, Alain, Marie, 77550 MOISSY-CRAMAYEL (FR); FRANTZ, Caroline, Marie, 77550 MOISSY-CRAMAYEL (FR); GUILLOTEL, Loïc, Paul, Yves, 77550 MOISSY-CRAMAYEL (FR); MILLIER, Vincent, François, Georges, 77550 MOISSY-CRAMAYEL (FR)
(74) Mandataire: Gevers & Orès
(86) Numéro de dépôt international: PCT/FR2019/052403
(87) Numéro de publication internationale: WO 2020/084219

(56) Documents cités:
- EP-A1- 1 382 802
- EP-A1- 1 841 960
- EP-A2- 2 270 315
- FR-A1- 2 922 265
- US-A- 3 264 482

## Description

### DOMAINE TECHNIQUE

La présente invention concerne une turbomachine d'aéronef équipée d'une machine électrique.

### ETAT DE L'ART

L'état de l'art comprend notamment le document FR-A1-2 842 565 qui décrit une turbomachine d'aéronef équipée d'une machine électrique ainsi que les documents EP-A2-2 270 315, US-A-3 264 482, FR-A1-2 922 265, EP-A1-1 841 960 et EP-A1-1 382 802.

L'utilisation de l'énergie électrique est aujourd'hui envisagée non seulement pour répondre à des fonctions de l'aéronef mais également pour électrifier des fonctions de la turbomachine.

Ce constat conduit à étudier des solutions d'architecture moteur hybridée, combinant l'énergie fossile du carburant et l'énergie électrique pour assurer l'entraînement de la partie propulsive (soufflante de la turbomachine) et l'alimentation de certaines fonctions moteurs et/ou aéronef.

Ces architectures peuvent notamment se baser sur une architecture de type à grand taux de dilution et à réducteur, mais aussi à multiple corps (2 ou 3). Dans ces architectures, la turbomachine comprend au moins un corps basse pression et un corps haute pression, chaque corps comportant un arbre reliant un rotor d'un compresseur à un rotor d'une turbine.

Il est connu d'équiper une turbomachine d'aéronef avec une machine électrique. On rappelle qu'une machine électrique est un dispositif électromécanique basé sur l'électromagnétisme permettant la conversion d'énergie électrique par exemple en énergie mécanique. Ce processus est réversible et peut servir à produire de l'électricité à partir d'une énergie mécanique.

Ainsi, suivant l'usage final d'une machine, on utilise les termes de :
- générateur pour désigner une machine électrique produisant de l'énergie électrique à partir d'une énergie mécanique,
- moteur pour une machine électrique produisant une énergie mécanique à partir d'une énergie électrique.

Une machine électrique peut également se comporter en mode moteur comme en mode générateur.

L'intégration d'une machine électrique de forte puissance sur le corps basse pression d'une turbomachine, en particulier de type à grand taux de dilution, s'avère très complexe. Plusieurs zones d'installation sont possibles mais les avantages et les inconvénients de chacune sont nombreux et divers (problème d'intégration mécanique de la machine, tenue en température de la machine, accessibilité de la machine, etc.).

Un des problèmes majeurs de l'intégration d'une machine électrique dans une turbomachine est d'avoir un environnement capable d'accepter la température limitée des composants de celle-ci (environ 150°C). De plus, le rendement global de la machine étant forcement inférieur à 100%, la chaleur dégagée par les pertes doit être évacuée. Sur des tailles de machine de plus de 1MW, la puissance dissipée est alors importante (50KW mini). Une solution consisterait à refroidir le stator de la machine avec de l'huile. Cependant, si la machine se trouve dans une enceinte huile, celle-ci peut alors directement fuir dans l'enceinte avec des risques de pollution par des particules issues de la machine. Si la machine est dans un environnement sec, le circuit de refroidissement doit dans ce cas être étanche et il faut alors être capable de récupérer les éventuelles fuites. Le refroidissement à l'huile présente donc des inconvénients.

Une autre difficulté majeure est liée au respect de l'aspect modulaire de la turbomachine. Il est en effet souhaitable d'intégrer un module de machine électrique capable d'être montée en une seule fois dans le générateur de gaz.

La présente invention propose une solution à au moins une partie des problèmes évoqués dans ce qui précède.

### EXPOSE DE L'INVENTION

L'invention propose une turbomachine d'aéronef selon la revendication 1.

La présente invention propose ainsi une solution d'intégration d'une machine électrique, un premier avantage étant lié au fait que, dans la zone d'intégration de cette machine, les températures qui y règnent sont relativement faibles et donc optimales pour cette machine. Par ailleurs, la machine peut être refroidie par le flux primaire, ce qui optimise la durée de vie de la machine. La machine électrique est de préférence située en dehors de toute enceinte d'huile de lubrification d'un palier, de façon à ne pas avoir de risque de pollution par l'huile de cette machine.

Les rotors du compresseur basse pression et de la machine électrique sont accouplés au rotor du corps basse pression par l'intermédiaire d'un arbre intermédiaire qui permet d'autoriser et de faciliter l'assemblage modulaire de la turbomachine. En effet, il suffit de monter et de fixer les différents rotors les uns sur les autres pour réaliser l'assemblage de la turbomachine.

La turbomachine selon l'invention peut comprendre une ou plusieurs des caractéristiques suivantes, prises isolément les unes des autres ou en combinaison les unes avec les autres :
- la machine électrique est située en amont du compresseur basse pression,
- la machine électrique est située en aval du compresseur basse pression,
- la machine électrique comprend un stator qui entoure son rotor et qui est configuré pour être refroidi par ledit flux primaire,
- le stator de la machine électrique comprend une surface radialement externe balayée par ledit flux primaire,
- la machine électrique comprend un stator qui entoure son rotor et qui est lui-même entouré par une virole, cette virole étant écartée radialement du stator et comportant une surface radialement externe balayée par ledit flux primaire,
- la machine électrique comprend un stator qui est entouré par son rotor,
- ledit arbre intermédiaire comprend des tronçons adjacents destinés à être entourés respectivement par un tourillon du rotor du compresseur basse pression, et soit par un organe relié ou fixé au rotor de la machine électrique soit par une pièce reliée ou fixée au stator de la machine électrique, ledit arbre intermédiaire comportant des cannelures externes d'accouplement au tourillon et à l'organe ou à la pièce,
- ledit tourillon, d'une part, et ledit organe ou ladite pièce, d'autre part, sont serrés axialement l'un contre l'autre et sur un épaulement cylindrique dudit arbre intermédiaire, par un écrou rapporté et vissé sur ledit arbre intermédiaire,
- la soufflante est entraînée par le rotor du corps basse pression par l'intermédiaire d'un réducteur, la machine électrique étant située en aval du réducteur qui comprend un arbre d'entrée dont une extrémité aval est engagée sur une extrémité amont du rotor du corps basse pression et est serré axialement contre ledit arbre intermédiaire par un écrou rapporté et fixé sur cette extrémité amont.

La présente invention concerne encore un procédé d'assemblage modulaire d'une turbomachine telle que décrite ci-dessus, comprenant les étapes consistant à :
a) monter et fixer le rotor de la machine électrique et le rotor du compresseur basse pression sur ledit arbre intermédiaire, par translation axiale, et
b) monter et fixer ledit arbre intermédiaire sur le rotor du corps basse pression, par translation axiale.

Le procédé peut en outre comprendre une étape supplémentaire consistant en outre à c) monter et fixer l'arbre d'entrée du réducteur sur le rotor du corps basse pression, par translation axiale.

### DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue schématique en coupe axiale d'une turbomachine d'aéronef à fort taux de dilution et réducteur ;
- la figure 2 est une demi vue schématique partielle en coupe axiale d'une turbomachine d'aéronef selon l'invention équipée d'une machine électrique ;
- la figure 3 est une vue à plus grande échelle d'un détail de la figure 2 ;
- la figure 4 est une vue schématique partielle en coupe axiale de la machine électrique et de la turbomachine de la figure 2, et illustre des étapes d'un procédé d'assemblage selon l'invention,
- la figure 5 est une demi vue schématique partielle en coupe axiale d'une turbomachine d'aéronef selon une variante de réalisation de l'invention,
- la figure 6 est une demi vue schématique partielle en coupe axiale d'une turbomachine d'aéronef selon une autre variante de réalisation de l'invention,
- la figure 7 est une vue schématique partielle en coupe axiale de la machine électrique et de la turbomachine de la figure 6, et illustre des étapes d'un procédé d'assemblage selon l'invention, et
- la figure 8 est une demi vue schématique partielle en coupe axiale d'une turbomachine d'aéronef selon une autre variante de réalisation de l'invention.

### DESCRIPTION DETAILLEE

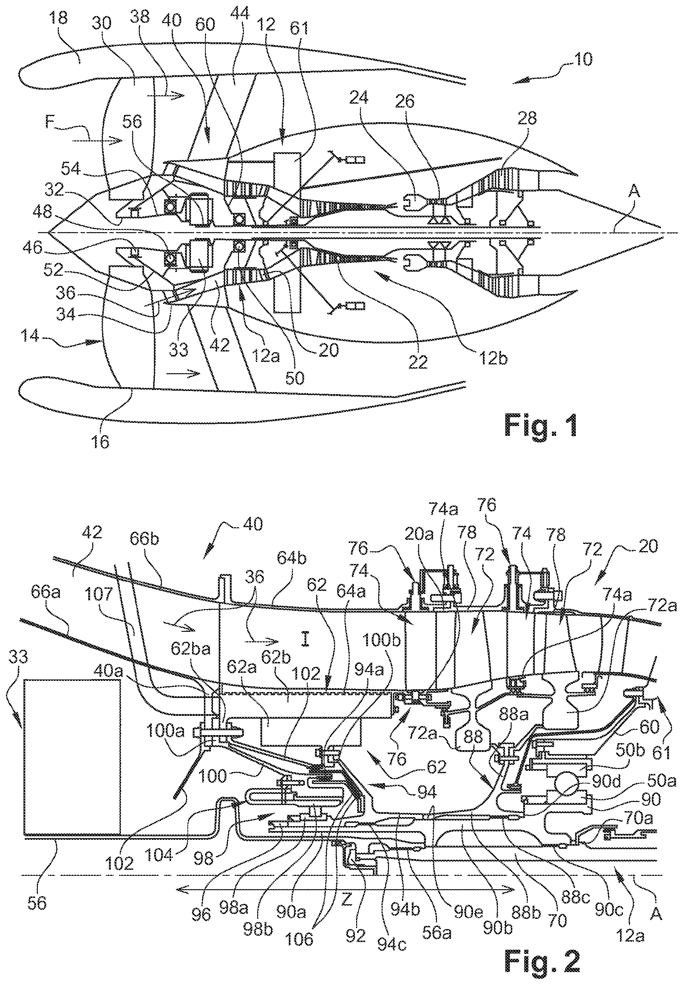

On se réfère d'abord à la figure 1 qui représente schématiquement une turbomachine 10 d'aéronef à double corps et double flux.

La turbomachine 10 comporte de façon classique un générateur de gaz 12 à l'amont duquel est disposée une soufflante 14. La soufflante 14 est entourée par un carter de soufflante 16 qui est entouré par une nacelle 18 qui s'étend autour et le long d'une majeure partie du générateur de gaz 12.

Le générateur de gaz 12 comprend ici deux corps, à savoir un corps basse pression 12a ou BP et un corps haute pression 12b ou HP. Chaque corps comprend un compresseur et une turbine.

Les termes « amont » et « aval » sont considérés selon une direction principale F d'écoulement des gaz dans la turbomachine 10, cette direction F étant parallèle à l'axe longitudinal A de la turbomachine.

De l'amont vers l'aval, le générateur de gaz 12 comprend un compresseur basse pression 20, un compresseur haute pression 22, une chambre de combustion 24, une turbine haute pression 26 et une turbine basse pression 28.

Les compresseurs basse pression 20 et haute pression 22 sont séparés l'un de l'autre par un carter intermédiaire 61.

La soufflante 14 comprend une rangée annulaire d'aubes 30 entraînée en rotation par un arbre de soufflante 32 qui est relié au rotor du corps basse pression 12a par l'intermédiaire d'un réducteur 33. Le flux de gaz qui traverse la soufflante (flèche F) est séparé à l'amont du générateur de gaz 12 par un bec annulaire 34 en un flux annulaire radialement interne, appelé flux primaire 36 qui alimente le générateur de gaz 12, et en un flux annulaire radialement externe, appelé flux secondaire 38 qui s'écoule entre le générateur de gaz 12 et la nacelle 18 et fournit la majeure partie de la poussée de la turbomachine.

Un carter d'entrée 40 relie structurellement le générateur de gaz 12 au carter de soufflante 16 et à la nacelle 18. Comme c'est le cas du carter intermédiaire 61, le carter d'entrée 40 comprend une rangée annulaire de bras 42 radialement internes s'étendant dans le flux primaire 36, et une rangée annulaire d'aubes redresseurs 44 (du type OGV) radialement externes s'étendant dans le flux secondaire 38. Les bras 42 sont en général en nombre limités (moins de dix) et sont tubulaires et traversés par des servitudes. Le nombre d'aubes 44 (OGV) est en général supérieur à dix.

Le rotor du corps basse pression 12a ainsi que l'arbre de soufflante 32 sont guidés à l'amont par des paliers 46, 48 et 50. Ces paliers 46, 48, 50 sont par exemple du type à billes ou à rouleaux et comprennent chacun une bague interne montée sur l'arbre à guider, une bague externe portée par un support annulaire de paliers et un roulement entre les bagues.

De façon connue, le réducteur 33 est du type à train épicycloïdal et comprend un solaire centré sur l'axe A, une couronne s'étendant autour de l'axe et des satellites qui engrènent avec le solaire et la couronne et sont portés par un porte-satellites.

Dans l'exemple représenté, la couronne 33b est fixe et reliée fixement à un support 52 des paliers 46, 48. Le porte-satellites est tournant et relié à un arbre de sortie 54 du réducteur qui comprend en outre un arbre d'entrée 56 engrené avec le solaire. L'arbre d'entrée 56 est accouplé à l'arbre principal 70 du corps basse pression, et l'arbre de sortie 54 est accouplé avec l'arbre de soufflante 32.

L'arbre d'entrée 56 est guidé par le palier 50 qui est porté par un support de palier 60 (figure 1). L'arbre de sortie 54 est guidé par les paliers 46, 48.

Les supports de paliers 52, 60 s'étendent autour de l'axe A et sont des pièces fixes reliées au stator et par exemple au carter d'entrée 40.

La figure 2 est une vue à plus grande échelle d'une partie d'une turbomachine et illustre une zone d'installation d'une machine électrique 62, cette zone Z étant ici située en aval du réducteur 33 et en amont du carter intermédiaire 61.

Cette zone Z de forme annulaire est délimitée radialement à l'intérieur par l'arbre 70 principal du corps basse pression 12a ainsi que par l'arbre d'entrée 56 du réducteur 33, et radialement à l'extérieur par les éléments qui délimitent intérieurement la veine I d'écoulement du flux primaire 36. Ces éléments comprennent, d'amont en aval, d'une part une paroi annulaire interne 66a, une virole annulaire 64a, puis les disques 72a des roues 72 et les plateformes internes 74a des redresseurs aubagés 74 du compresseur basse pression 20.

La paroi 66a entoure le réducteur 33 et fait partie du carter d'entrée 40 car elle est reliée aux extrémités radialement internes des bras 42 dont les extrémités radialement externes sont reliées à une autre paroi annulaire externe 66b. La virole 64a s'étend autour de la machine électrique 62 et dans le prolongement de la paroi 66a.

La virole 64a est une virole interne et est entourée par une virole externe 64b, les viroles 64a, 64b définissant entre elles une portion de la veine I d'écoulement du flux primaire 36 en aval du carter d'entrée 40 et en amont du compresseur basse pression 20 et du carter intermédiaire 61. La virole 64b s'étend depuis l'extrémité aval de la paroi 66b jusqu'à une paroi 20a qui entoure les roues 72 et les redresseurs 74 du compresseur basse pression 20. La virole 64b peut être reliée ou formée d'une seule pièce avec cette paroi 20a.

Classiquement, cette paroi 20a comprend d'une part des moyens 76 de guidage en rotation et de calage variable des aubes des redresseurs 74 autours d'axes sensiblement radiaux, et des revêtements annulaires abradables 78 entourant les roues 72.

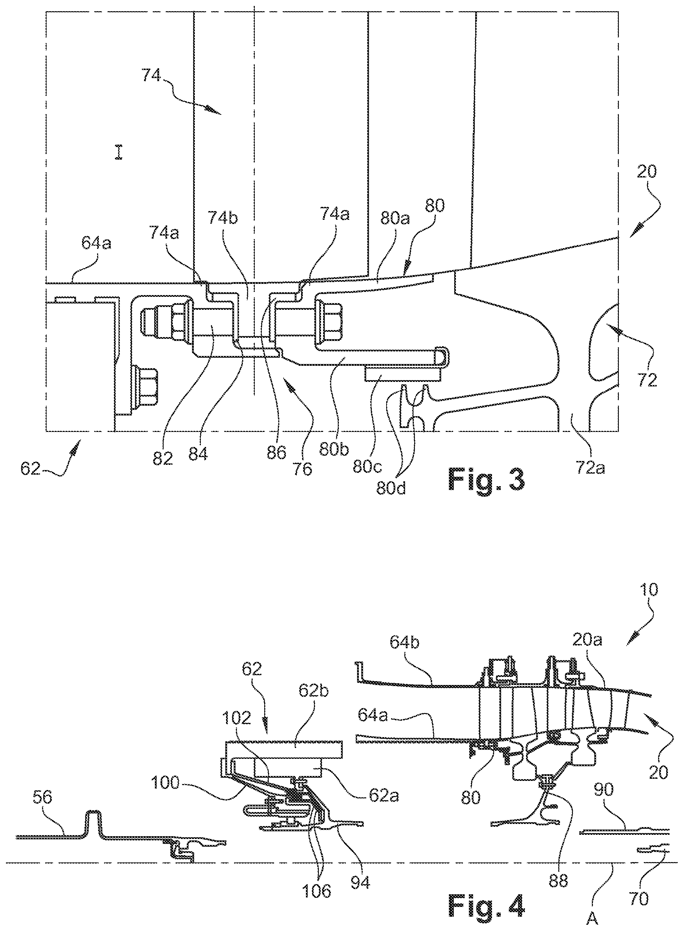

La virole 64a a son extrémité aval qui est également reliée ou fixée à des moyens 76 de guidage en rotation des aubes de redresseurs 74 autour des mêmes axes. Comme cela est mieux visible à la figure 3, un anneau 80 est rapporté et fixé à l'extrémité aval de la virole 64a par une série annulaire de vis 82 s'étendant sensiblement axialement. La virole 64a et l'anneau 80 forment une des plateformes 74a précitées et définissent entre eux des logements cylindriques 84 orientés radialement de réception et de guidage de pivots cylindriques 74b radialement internes des aubes de redresseurs 74. Le pivot de chaque aube peut être guidé dans ce logement 84 par une douille cylindrique 86 qui peut être maintenue radialement dans le logement par l'intermédiaire des vis 82 par exemple.

L'anneau 80 a en section axiale une forme générale en C dont l'ouverture est orientée axialement. Cet anneau 80 comprend un rebord périphérique externe 80a sensiblement cylindrique qui s'étend dans le prolongement de la virole 64a et définit intérieurement la veine I, et un rebord périphérique interne 80b sensiblement cylindrique qui porte un revêtement annulaire 80c en matériau abradable destiné à coopérer avec des léchettes 80d portées par le disque 72a de la roue amont du compresseur 20.

Les disques 72a des roues 72 du compresseur 20 sont fixés à un tourillon 88 qui est entraîné par l'arbre 70 par l'intermédiaire d'un arbre intermédiaire 90 (figure 2).

Le tourillon 88 a une forme annulaire et présente en section axiale une forme générale en T. Le tourillon 88 comprend une branche annulaire radiale 88a dont la périphérie interne est reliée à une branche cylindrique 88b. La périphérie externe de la branche radiale 88a est fixée par des vis à des brides des disques 72a des roues 72, et la branche cylindrique 88b comprend des cannelures internes 88c d'accouplement à des cannelures externes de l'arbre intermédiaire 90.

L'arbre intermédiaire 90 a une forme générale tubulaire et comprend un tronçon amont 90a et un tronçon aval 90b. Le tourillon 88 est monté sur le tronçon aval 90b de l'arbre intermédiaire 90, ce tronçon aval 90b comportant des cannelures internes 90c d'accouplement à des cannelures externes de l'arbre principal 70, ainsi qu'un épaulement cylindrique 90d d'appui axial vers l'aval du tourillon 88 et en particulier de l'extrémité aval de sa branche cylindrique 88b. L'arbre intermédiaire 90 peut en outre comprendre une surface cylindrique externe 90e de centrage de la branche 88b et donc du tourillon 88.

Le tronçon amont 90a de l'arbre intermédiaire 90 s'étend autour de l'extrémité aval de l'arbre d'entrée 56 du réducteur 33. Cet arbre d'entrée 56 comprend des cannelures internes 56a d'accouplement avec des cannelures externes de l'arbre principal 70. Par ailleurs, un écrou 92 est serré axialement à l'extrémité amont de l'arbre principal 70 et prend appui axialement sur l'arbre d'entrée 56 pour le serrer axialement contre l'arbre intermédiaire 90qui prend lui-même appui axialement sur un épaulement cylindrique 70a de l'arbre principal 70.

À son extrémité aval, l'arbre intermédiaire 90 porte la bague interne 50a du palier 50, ici à billes, dont la bague externe 50b est portée par le support de palier 60. Ce support 60 a une forme générale tronconique et est évasé axialement vers l'aval. Son extrémité aval de plus grand diamètre est fixée au carter intermédiaire 61.

Ce type de palier 50 est classiquement lubrifié et est situé dans une enceinte annulaire de lubrification qui est rendue étanche pour éviter toute fuite d'huile en particulier vers l'amont, dans la zone Z d'implantation de la machine électrique 62.

La machine 62 a une forme générale annulaire et comprend un rotor 62a et un stator 62b qui entoure le rotor 62a. Le rotor 62a a une forme générale cylindrique s'étendant autour de l'axe A et est fixé à un organe annulaire 94 s'étendant également autour de l'axe A.

L'organe 94 présente en section axiale une forme générale en T. L'organe 94 comprend une branche annulaire radiale 94a dont la périphérie interne est reliée à une branche cylindrique 94b. La périphérie externe de la branche radiale 94a est fixée par des vis au rotor 62a, et la branche cylindrique 94b comprend des cannelures internes 94c d'accouplement à des cannelures externes de l'arbre intermédiaire 90, et en particulier de son tronçon amont 90a.

L'extrémité aval de la branche cylindrique 94b est d'une part en appui axial sur l'extrémité amont de la branche cylindrique 88b du tourillon 88, et coopère d'autre part avec la surface cylindrique 90e de centrage portée par l'arbre intermédiaire 90.

Un écrou 96 est serré axialement à l'extrémité amont de l'arbre intermédiaire 90 et prend appui axialement sur l'organe 94 pour le solliciter axialement contre le tourillon 88.

À son extrémité amont, la branche cylindrique 94b de l'organe 94 porte une bague interne 98a d'un palier 98, ici à rouleaux, dont la bague externe 98b est portée par un autre support annulaire de palier 100. Ce support 100 a une forme générale tronconique et est évasé axialement vers l'amont. Son extrémité amont de plus grand diamètre est fixée au stator 62b de la machine électrique 62.

Le stator 62b a également une forme générale cylindrique. Il comprend à son extrémité amont une bride annulaire radialement interne de fixation de plusieurs brides dont une 100a du support de palier 100. La bride 62ba du stator 62b est également fixée à une bride 40a du carter d'entrée 40, ainsi qu'à des brides de capots 102 d'étanchéité et/ou de déflecteurs.

La périphérie interne du support de palier 100 peut être équipée d'un système d'amortissement 104 à film d'huile, connu sous l'appellation anglo-saxonne *squeeze-film.* Elle peut en outre comprendre un rebord cylindrique 100b orienté vers l'aval et comportant un revêtement annulaire interne en matériau abradable.

Deux capots annulaires d'étanchéité 106 peuvent être fixés à l'organe 94 et en particulier à sa branche radiale 94a, et porter des léchettes annulaires radialement externes destinées à coopérer d'une part avec le revêtement porté par le rebord 100b, ainsi qu'avec un revêtement similaire porté par l'un des capots 102 fixés à la bride 62ba du stator 62b.

Le palier 98 est classiquement lubrifié et est situé dans une enceinte annulaire de lubrification qui est rendue étanche pour éviter toute fuite d'huile en particulier vers l'aval, dans la zone Z d'implantation de la machine électrique 62.

Le stator 62b est relié par un câble électrique 107 à un circuit de commande, ce câble 107 passant ici à travers un bras tubulaire 42 du carter d'entrée 40.

Une des particularités de cette installation réside dans le fait que la machine électrique 62 et en particulier son stator 62b est situé au plus prés du flux primaire 36. Ceci permet d'une part de disposer d'une machine électrique 62 à grand diamètre et donc à puissance potentielle supérieure aux technologies proposées jusqu'ici, et d'une machine qui est refroidie par le flux primaire 36. Dans un cas particulier de réalisation de l'invention, 30KW pourrait être dissipé par ce refroidissement.

Pour cela, la virole 64 qui s'étend, de préférence directement, autour du stator 62b, a sa surface radialement externe qui est balayée par le flux 36 et qui peut de plus avoir un profil aérodynamique, comme représenté dans le dessin. La virole 64a assure l'échange de calories par conduction thermique entre le stator 62b et le flux 36.

La figure 4 illustre des étapes de montage de la turbomachine 10 et en particulier de modules de cette turbomachine.

Une première étape illustrée à la figure 4 consiste à assembler la machine 62, c'est-à-dire à insérer le rotor 62a dans le stator 62b, en fixant au préalable le support de palier 100 au stator 62b, et l'organe 94 au rotor 62a. Les capots 102, 106 peuvent également être fixés à cet assemblage.

La virole 64a peut alors être montée autour de la machine 62 et le module ainsi formé peut être fixé au compresseur 20, notamment en fixant l'extrémité aval de la virole 64a à l'anneau 80. La virole 64b est déjà prémontée sur la paroi 20a du compresseur 20, ou formée d'une seule pièce avec cette paroi 20a.

La machine 62 et le compresseur 20 peuvent ensuite être engagés sur l'arbre intermédiaire 90 qui est préalablement monté sur l'arbre principal 70 ou monté par la suite sur cet arbre 70. Le tourillon 88 du compresseur 20 est accouplé avec l'arbre intermédiaire 90 puis l'organe 94 est accouplé avec cet arbre intermédiaire et prend appui axialement sur le tourillon 88. L'écrou 96 serre l'organe 94 et le tourillon 88 contre l'épaulement 90d de l'arbre intermédiaire.

L'arbre d'entrée 56 du réducteur 33 est ensuite engagée par translation axiale depuis l'amont entre l'arbre 70 et l'arbre intermédiaire 90. L'arbre d'entrée 56 est accouplé avec l'arbre principal 70 et l'écrou 96 est serré pour bloquer axialement l'arbre d'entrée ainsi que l'arbre intermédiaire 90 sur l'arbre principal 70.

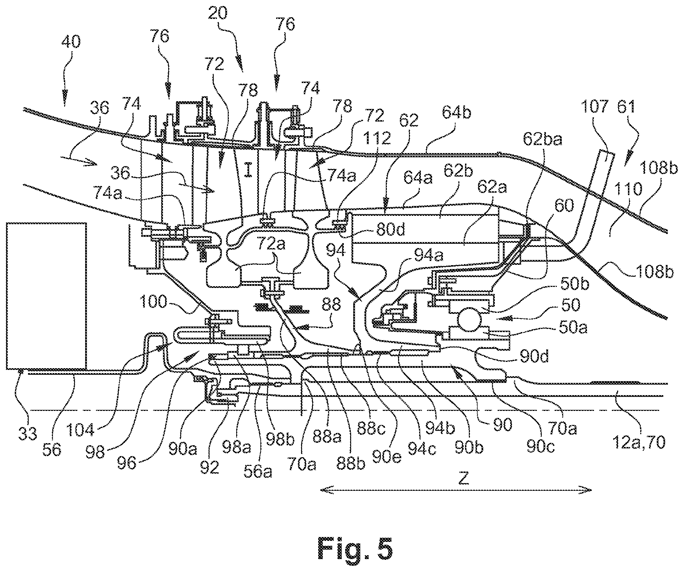

La figure 5 illustre une variante de réalisation d'une turbomachine selon l'invention.

Les éléments décrits dans ce qui précède et qui se retrouvent dans cette variante de réalisation sont désignés par les mêmes références.

La zone Z d'implantation de la machine électrique 62 est ici située en aval du réducteur 33 et du compresseur 20, et en amont du carter intermédiaire 61.

Cette zone Z de forme annulaire est délimitée radialement à l'intérieur par l'arbre 70 principal du corps basse pression 12a ainsi que par l'arbre d'entrée 56 du réducteur 33, et radialement à l'extérieur par les éléments qui délimitent intérieurement la veine I d'écoulement du flux primaire 36. Ces éléments comprennent ici, d'amont en aval, , les disques 72a des roues 72 et les plateformes internes 74a des redresseurs aubagés 74 du compresseur basse pression 20, la virole annulaire 64a, puis une paroi annulaire interne 108a.

La paroi 108a fait partie du carter intermédiaire car elle est reliée aux extrémités radialement internes de bras 110 dont les extrémités radialement externes sont reliées à une autre paroi annulaire externe 108b. La virole 64a s'étend autour de la machine électrique 62 et dans le prolongement des disques 72a des roues 72 et des plateformes internes 74a des redresseurs aubagés 74 du compresseur 20.

La virole 64a est une virole interne et est entourée par une virole externe 64b, les viroles 64a, 64b définissant entre elles une portion de la veine I d'écoulement du flux primaire 36 en aval du compresseur basse pression 20 et en amont du carter intermédiaire 61. La virole 64b s'étend depuis l'extrémité aval de la paroi 20a jusqu'à une paroi annulaire externe 108b qui est reliée aux extrémités radialement externe des bras 110 et fait donc partie du carter intermédiaire 61. La virole 64b peut être reliée ou formée d'une seule pièce avec la paroi 20a.

Classiquement, cette paroi 20a comprend d'une part des moyens 76 de guidage en rotation et de calage variable des aubes des redresseurs 74 autours d'axes sensiblement radiaux, et des revêtements annulaires abradables 78 entourant les roues 72.

La virole 64a comprend à son extrémité amont un rebord cylindrique 112 orienté vers l'amont et portant un revêtement annulaire en matériau abradable destiné à coopérer avec des léchettes 80d portées par le disque 72a de la roue aval du compresseur 20.

Les disques 72a des roues 72 du compresseur 20 sont fixés à un tourillon 88 qui est entraîné par l'arbre 70 par l'intermédiaire d'un arbre intermédiaire 90.

Le tourillon 88 a une forme annulaire et présente en section axiale une forme générale en T. Le tourillon 88 comprend une branche annulaire radiale 88a dont la périphérie interne est reliée à une branche cylindrique 88b. La périphérie externe de la branche radiale 88a est fixée par des vis à des brides des disques 72a des roues 72, et la branche cylindrique 88b comprend des cannelures internes 88c d'accouplement à des cannelures externes de l'arbre intermédiaire 90.

L'arbre intermédiaire 90 a une forme générale tubulaire et comprend un tronçon amont 90a et un tronçon aval 90b. Le tourillon 88 est monté sur le tronçon amont 90a de l'arbre intermédiaire 90, l'arbre 90 comportant des cannelures internes 90c d'accouplement à des cannelures externes de l'arbre principal 70. L'arbre intermédiaire 90 peut en outre comprendre une surface cylindrique externe 90e de centrage de la branche 88b et donc du tourillon 88.

L'arbre d'entrée 56 du réducteur 33 comprend des cannelures internes 56a d'accouplement avec des cannelures externes de l'arbre principal 70. Par ailleurs, un écrou 92 est serré axialement à l'extrémité amont de l'arbre principal 70 et prend appui axialement sur l'arbre d'entrée 56 pour le serrer axialement contre le tourillon 88 qui prend lui-même appui axialement sur un épaulement cylindrique 70a de l'arbre principal 70.

À son extrémité aval, l'arbre intermédiaire 90 porte la bague interne 50a du palier 50, ici à billes, dont la bague externe 50b est portée par le support de palier 60. Ce support 60 a une forme générale tronconique et est évasé axialement vers l'aval. Son extrémité aval de plus grand diamètre est fixée au carter intermédiaire 61.

Ce type de palier 50 est classiquement lubrifié et est situé dans une enceinte annulaire de lubrification qui est rendue étanche pour éviter toute fuite d'huile en particulier vers l'amont, dans la zone Z d'implantation de la machine électrique 62.

La machine 62 a une forme générale annulaire et comprend un rotor 62a et un stator 62b qui entoure le rotor 62a. Le rotor 62a a une forme générale cylindrique s'étendant autour de l'axe A et est relié à un organe annulaire 94 s'étendant également autour de l'axe A.

L'organe 94 présente en section axiale une forme générale en T ou C. L'organe 94 comprend une branche annulaire radiale 94a dont la périphérie interne est reliée à une branche cylindrique 94b. La périphérie externe de la branche radiale 94a est reliée au rotor 62a, et la branche cylindrique 94b comprend des cannelures internes 94c d'accouplement à des cannelures externes de l'arbre intermédiaire 90, et en particulier de son tronçon aval 90b.

L'extrémité aval de la branche cylindrique 94b est d'une part en appui axial sur un épaulement cylindrique 90d de l'arbre intermédiaire 90, et son extrémité amont est en appui axial vers l'amont sur l'extrémité aval du tourillon 88. Cette extrémité amont de la branche 94b coopère et en d'autre part avec la surface cylindrique 90e de centrage portée par l'arbre intermédiaire 90.

Un écrou 96 est serré axialement à l'extrémité amont de l'arbre intermédiaire 90 et prend appui axialement sur le tourillon 88 pour le solliciter axialement contre l'organe 94.

À son extrémité amont, l'arbre intermédiaire 90 porte une bague interne 98a d'un palier 98, ici à rouleaux, dont la bague externe 98b est portée par un autre support annulaire de palier 100. Ce support 100 a une forme générale tronconique et est évasé axialement vers l'amont. Son extrémité amont de plus grand diamètre est fixée au carter d'entrée 40.

Le stator 62b a également une forme générale cylindrique. Il comprend à son extrémité aval une bride annulaire 62ba de fixation de plusieurs brides dont une de la virole 108a. La bride 62ba du stator 62b est également fixée à une bride du support de palier 60.

La périphérie interne du support de palier 60 peut être équipée d'un système d'amortissement 104 à film d'huile, connu sous l'appellation anglo-saxonne *squeeze-film.*

Le palier 98 est classiquement lubrifié et est situé dans une enceinte annulaire de lubrification qui est rendue étanche pour éviter toute fuite d'huile en particulier vers l'aval, dans la zone Z d'implantation de la machine électrique 62.

Le stator 62b est relié par un câble électrique 107 à un circuit de commande, ce câble 107 passant ici à travers un bras tubulaire 110 du carter intermédiaire 61.

Comme dans le précédent mode de réalisation, la virole 64a qui s'étend, de préférence directement, autour du stator 62b, a sa surface radialement externe qui est balayée par le flux 36 et qui peut de plus avoir un profil aérodynamique, comme représenté dans le dessin. La virole 64a assure l'échange de calories par conduction thermique entre le stator 62b et le flux 36.

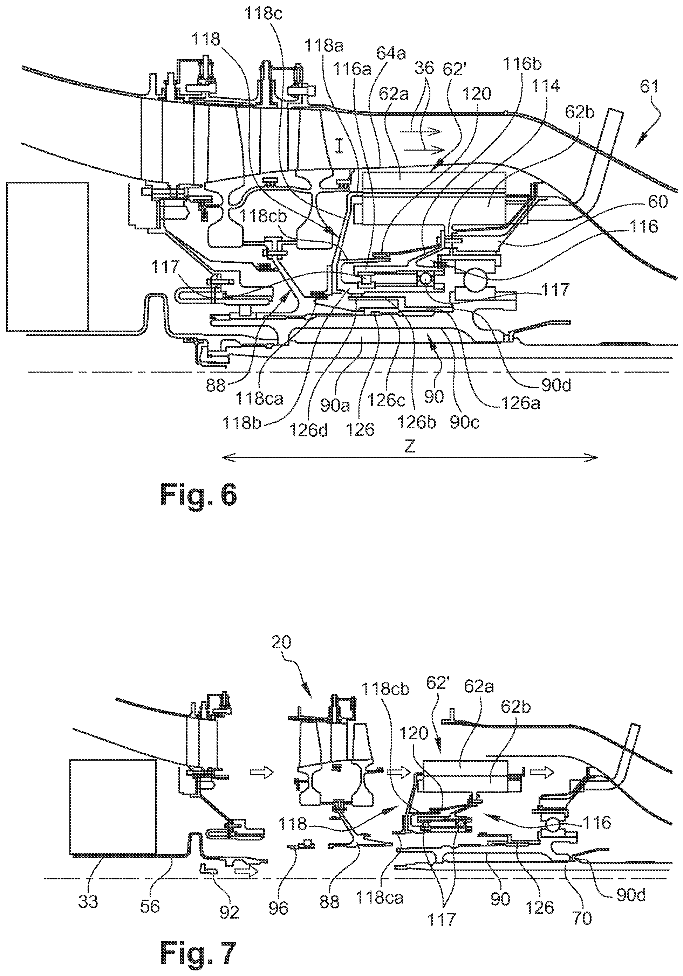

Les figures 6 et 7 illustrent une autre variante de réalisation de l'invention. La zone Z d'installation de la machine électrique 62' est ici similaire à celle du précédent mode de réalisation de la figure 5.

La machine électrique 62' diffère de la machine 62 du précédent mode de réalisation en ce que le rotor 62a s'étend ici autour du stator 62b et est ainsi situé au plus près de la veine I d'écoulement du flux primaire 36.

Le stator 62b est fixé au carter intermédiaire 61 et au support de palier 60, comme évoqué dans ce qui précède. Le stator 62b comprend en outre une bride annulaire radialement interne 114 de fixation d'un autre support annulaire 116 de paliers 117 ici de guidage en rotation du rotor 62a.

Ce support de paliers 116 a en section une forme générale en T et comprend une branche cylindrique radialement interne 116a reliée à la périphérie interne d'une branche annulaire 116b sensiblement tronconique dont la périphérie externe est fixée à la bride 114.

Le rotor 62a a une forme générale cylindrique et est relié ou intégré à un organe annulaire 118 à section axiale de forme générale en C. Cet organe 118 comprend deux parties annulaires, respectivement interne 118b et externe 118a, qui s'étendent l'une autour de l'autre et dont les extrémités amont sont reliées entre elles par un fond annulaire 118c. L'organe 118 définit ainsi une ouverture qui est ici orientée axialement vers l'aval et dans laquelle sont logés le stator 62b ainsi que le support de paliers 116.

Le rotor 62a est intégré à la partie externe 118a de l'organe 118 ou forme cette partie externe 118a. Cette partie externe 118a est entourée, ici directement par la virole 64a avec un jeu prédéterminé.

Le fond 118c de l'organe 118 comprend un voile annulaire 118cb s'étendant axialement vers l'aval et donc dans l'ouverture et coopérant à étanchéité avec le support de paliers 116 ou un capot annulaire 120 fixé à la bride 114. L'étanchéité est assurée par un joint à labyrinthe dont les léchettes annulaires sont par exemple portées par le voile 118cb et le revêtement abradable est porté par le capot 120.

Le fond 118c comprend en outre un voile annulaire 118ca s'étendant axialement vers l'amont et coopérant à étanchéité avec le tourillon 88. L'étanchéité est assurée par un joint à labyrinthe dont les léchettes annulaires sont par exemple portées par le tourillon 88 et le revêtement abradable est porté par le voile 118ca.

La partie 118b de l'organe 118 s'étend radialement à l'intérieur du stator 62b et du support de paliers 116, et les paliers 117 sont montés entre la partie 118b et ce support de paliers 116 afin de guider en rotation le rotor 62a vis-à-vis du stator 62b.

Les paliers 117 sont ici au nombre de deux et écartés axialement l'un de l'autre. A titre d'exemple, le palier amont est à rouleaux et le palier aval est à billes.

L'organe 118 et en particulier sa partie 118b entoure le tronçon aval 90b de l'arbre intermédiaire 90 et est accouplé à cet arbre par l'intermédiaire d'une pièce annulaire 126 d'accouplement mais ici aussi d'amortissement.

Cette pièce 126 est ici serrée axialement entre le tourillon 88, situé à l'amont, et l'épaulement 90d de l'arbre intermédiaire 90, et donc en lieu et place de la branche cylindrique 94b du précédent mode de réalisation.

La pièce 126 comprend une portion cylindrique radialement interne 126a s'étendant entre le tourillon 88 et l'épaulement 90d et accouplée par des cannelures internes 126c à des cannelures externes complémentaires de l'arbre intermédiaire 90, et une portion de souplesse radialement externe 126b. Cette portion 126b a une demi section axiale en forme de C dont l'ouverture est orientée axialement, ici vers l'amont. Cette portion 126b comprend à sa périphérie externe des cannelures externes 126d qui coopèrent avec des cannelures internes complémentaires de la partie 118b de l'organe 118.

La figure 7 illustre des étapes de montage de la turbomachine 10 de la figure 6 et en particulier de modules de cette turbomachine.

Une première étape consiste à assembler la machine 62', c'est-à-dire à insérer le stator 62b, le support de paliers 116 et les paliers 117, dans l'ouverture délimitée par le rotor 62a et son organe 118. Les voiles 118ca, 118cb et capot 120 peuvent également être fixés à cet assemblage.

La machine 62' et le compresseur 20 peuvent ensuite être engagés sur l'arbre intermédiaire 90 qui est préalablement monté sur l'arbre principal 70. Le tourillon 88 du compresseur 20 est accouplé avec l'arbre intermédiaire 90 et prend appui axialement sur la pièce 126 préalablement montée sur l'arbre 90. L'écrou 96 serre le tourillon 88 et cette pièce 126 contre l'épaulement 90d de l'arbre intermédiaire 90.

L'arbre d'entrée 56 du réducteur 33 est ensuite engagé par translation axiale depuis l'aval, entre l'arbre 70 et l'arbre intermédiaire 90. L'arbre d'entrée 56 est accouplé avec l'arbre principal 70 et l'écrou 92 est serré pour bloquer axialement l'arbre d'entrée 56 ainsi que l'arbre intermédiaire 90 sur l'arbre principal 70.

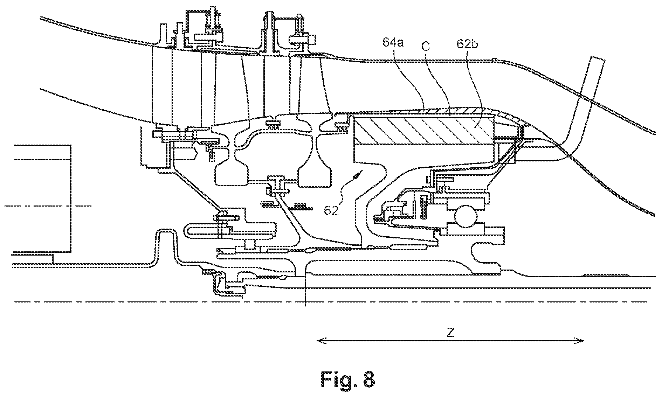

La figure 8 illustre une autre variante de réalisation de l'invention. La zone Z d'installation de la machine électrique 62 est ici similaire à celle du mode de réalisation de la figure 5.

La machine électrique 62 est similaire à celle de la figure 5 à l'exception du fait que le capot C de son stator 62b est dissocié de la virole 64a. Les autres caractéristiques de cette variante de réalisation sont similaires à celles du mode de réalisation de la figure 5.

## Revendications

1. Turbomachine (10) d'aéronef, comportant un générateur de gaz (12) et une soufflante (14) disposée en amont du générateur de gaz et configurée pour générer un flux principal de gaz (F) dont une partie s'écoule dans une veine du générateur de gaz pour former un flux primaire (36), et dont une autre partie s'écoule dans une veine autour du générateur de gaz pour former un flux secondaire (38), le générateur de gaz comportant un corps basse pression (12a) qui comprend un rotor (70) entraînant la soufflante et qui comprend un compresseur basse pression (20) situé en amont d'un carter intermédiaire (61), la turbomachine comportant en outre une machine électrique (62, 62') montée coaxialement au rotor du corps basse pression en aval de la soufflante et en amont du carter intermédiaire, la turbomachine comportant en outre un arbre intermédiaire (90) qui est entraîné par le rotor du corps basse pression,
ledit arbre intermédiaire (90) ayant une forme générale tubulaire, étant configuré pour être traversé par ledit rotor du corps basse pression (12a), et comportant des cannelures internes (90c) d'accouplement en rotation audit rotor du corps basse pression,
**caractérisé en ce que** l'arbre intermédiaire entraîne d'une part un rotor de la machine électrique et d'autre part un rotor du compresseur basse pression.

2. Turbomachine (10) selon la revendication 1, dans laquelle la machine électrique (62, 62') est située en amont du compresseur basse pression (20).

3. Turbomachine (10) selon la revendication 1, dans laquelle la machine électrique (62) est située en aval du compresseur basse pression (20).

4. Turbomachine (10) selon l'une des revendications 1 à 3, dans laquelle la machine électrique (62, 62') comprend un stator (62b) qui entoure son rotor (62a) et qui est configuré pour être refroidi par ledit flux primaire (36).

5. Turbomachine (10) selon la revendication 1, dans laquelle ledit arbre intermédiaire (90) comprend des tronçons (90a, 90b) adjacents destinés à être entourés respectivement par un tourillon (88) du rotor du compresseur basse pression (20) et, soit par un organe (94) relié ou fixé au rotor (62a) de la machine électrique (62), soit par une pièce (126) reliée ou fixée au stator (62b) de la machine électrique (62'), ledit arbre intermédiaire comportant des cannelures externes d'accouplement au tourillon et à l'organe (94) ou à la pièce (126).

6. Turbomachine (10) selon la revendication 1, dans laquelle ledit tourillon (88), d'une part, et ledit organe (94) ou ladite pièce (126), d'autre part, sont serrés axialement l'un contre l'autre et sur un épaulement cylindrique (90d) dudit arbre intermédiaire (90), par un écrou (96) rapporté et vissé sur ledit arbre intermédiaire.

7. Turbomachine (10) selon l'une des revendications 5 ou 6, dans laquelle la soufflante (14) est entraînée par le rotor du corps basse pression (12a) par l'intermédiaire d'un réducteur (33), la machine électrique (62, 62') étant située en aval du réducteur qui comprend un arbre d'entrée (56) dont une extrémité aval est engagée sur une extrémité amont du rotor du corps basse pression (12a) et est serré axialement contre ledit arbre intermédiaire (90) par un écrou (92) rapporté et fixé sur cette extrémité amont.

8. Procédé d'assemblage modulaire d'une turbomachine (10) selon l'une des revendications précédentes, comprenant les étapes consistant à :
(a) monter et fixer le rotor (62a) de la machine électrique (62, 62') et le rotor du compresseur basse pression (20) sur ledit arbre intermédiaire (90), par translation axiale, et
(b) monter et fixer ledit arbre intermédiaire (90) sur le rotor du corps basse pression (12a), par translation axiale.

9. Procédé selon la revendication précédente, la turbomachine (10) étant telle que définie à la revendication 8, comprenant une étape supplémentaire consistant en outre à :
(c) monter et fixer l'arbre d'entrée (56) du réducteur (33) sur le rotor du corps basse pression (12a), par translation axiale.

## Patentansprüche

1. Turbotriebwerk (10) eines Flugzeugs, umfassend einen Gasgenerator (12) und ein Gebläse (14), das stromaufwärts des Gasgenerators angeordnet ist und konfiguriert ist, um einen Hauptgasstrom (F) zu erzeugen, von dem ein Teil in einer Ader des Gasgenerators abströmt, um einen Primärstrom (36) zu erzeugen, und von dem ein anderer Teil in einer Ader um den Gasgenerator herum abströmt, um einen Sekundärstrom (38) zu erzeugen, wobei der Gasgenerator einen Niederdruckkörper (12a) umfasst, der einen Rotor umfasst, der das Gebläse antreibt, und der einen Niederdruckkompressor (20) umfasst, der stromaufwärts eines Zwischengehäuses (61) angeordnet ist, wobei das Turbotriebwerk weiter eine elektrische Maschine (62, 62') umfasst, die koaxial zum Rotor des Niederdruckkörpers stromabwärts des Gebläses und stromaufwärts des Zwischengehäuses angeordnet ist, wobei das Turbotriebwerk ferner eine Zwischenwelle (90) umfasst, die vom Rotor des Niederdruckkörpers angetrieben wird,
wobei die Zwischenwelle (90) eine im Wesentlichen rorhrförmige Form aufweist, so konfiguriert ist, dass der Rotor des Niederdruckkörpers (12a) durch sie hindurchgeführt werden kann, und die mit inneren Rillen (90c) zur Drehkupplung mit dem Rotor des Niederdruckkörpers versehen ist,
**dadurch gekennzeichnet, dass** die Zwischenwelle einerseits einen Rotor der elektrischen Maschine und andererseits einen Rotor des Niederdruckverdichters antreibt.

2. Turbotriebwerk (10) nach Anspruch 1, wobei die elektrische Maschine (62, 62') stromaufwärts des Niederdruckverdichters (20) gelegen ist.

3. Turbotriebwerk (10) nach Anspruch 1, wobei die elektrische Maschine (62) stromabwärts des Niederdruckverdichters (20) gelegen ist.

4. Turbotriebwerk (10) nach einem der Ansprüche 1 bis 3, wobei die elektrische Maschine (62, 62') einen Stator (62b) umfasst, der ihren Rotor (62a) umgibt und so konfiguriert ist, dass er durch den Primärstrom (36) gekühlt wird.

5. Turbotriebwerk (10) nach Anspruch 1, wobei die Zwischenwelle (90) benachbarte Abschnitte (90a, 90b) umfasst, die dazu bestimmt sind, jeweils von einem Zapfen (88) des Rotors des Niederdruckverdichters (20) bzw. von einem mit dem Rotor (62a) der elektrischen Maschine (62) verbundenen oder an diesem befestigten Element (94) umschlossen zu werden, oder von einem mit dem Stator (62b) der elektrischen Maschine (62') verbundenen oder daran befestigten Teil (126) umschlossen zu werden, wobei die Zwischenwelle äußeren Rillen zur Kopplung mit dem Zapfen und dem Element (94) oder mit dem Teil (126) aufweist.

6. Turbotriebwerk (10) nach Anspruch 1, wobei der Zapfen (88) und das Element (94) einerseits oder das Teil (126) andererseits durch eine auf die Zwischenwelle aufgesetzte und auf diese aufgeschraubte Mutter (96) axial gegeneinander und an einer zylindrischen Schulter (90d) der Zwischenwelle (90) geklemmt sind.

7. Turbotriebwerk (10) nach einem der Ansprüche 5 oder 6, wobei das Gebläse (14) vom Rotor des Niederdruckkörpers (12a) über ein Untersetzungsgetriebe (33) angetrieben wird, wobei die elektrische Maschine (62, 62') stromabwärts des Untersetzungsgetriebes angeordnet ist, das eine Antriebswelle (56) umfasst, deren stromabwärtiges Ende mit einem stromaufwärtigen Ende des Rotors des Niederdruckkörpers (12a) in Eingriff steht und durch eine an diesem stromaufwärtigen Ende aufgesetzte und auf dieses aufgeschraubte Mutter (92) axial gegen die Zwischenwelle (90) geklemmt ist.

8. Verfahren zum modularen Zusammensetzen eines Turbotriebwerks (10) nach einem der vorstehenden Ansprüche, umfassend die Schritte bestehend aus:
(a) Montieren und Befestigen des Rotors (62a) der elektrischen Maschine (62, 62') und des Rotors des Niederdruckverdichters (20) auf der Zwischenwelle (90) durch axiales Verschieben, und
(b) Montieren und Befestigen der Zwischenwelle (90) auf dem Rotor des Niederdruckverdichters (12a) durch axiales Verschieben.

9. Verfahren nach einem der vorstehenden Ansprüche, wobei das Turbotriebwerk (10) wie in Anspruch 8 definiert ist, umfassend einen zusätzlichen Schritt bestehend aus:
(c) Montieren und Befestigen der Eingangswelle (56) des Untersetzungsgetriebes (33) auf dem Rotor des Niederdruckverdichters (12a) durch axiales Verschieben.

## Claims

1. An aircraft turbomachine (10) comprising a gas generator (12) and a fan (14) arranged upstream from the gas generator and configured to generate a main gas flow (F), a portion of which flows into a duct of the gas generator to form a primary flow (36), and another portion of which flows through a duct around the gas generator to form a secondary flow (38), the gas generator comprising a low-pressure body (12a) that comprises a rotor (70) driving the fan and that comprises a low-pressure compressor (20) located upstream from an intermediate housing (61), the turbomachine further comprising an electric machine (62, 62') mounted coaxially with the rotor of the low-pressure body downstream from the fan and upstream from the intermediate housing, the turbomachine further comprising an intermediate shaft (90) that is driven by the rotor of the low-pressure body,
said intermediate shaft (90) having a generally tubular shape, being configured to be traversed by said rotor of the low-pressure body (12a), and comprising internal splines (90c) for rotational coupling to said rotor of the low-pressure body,
**characterized in that** the intermediate shaft drives, on the one hand, a rotor of the electric machine and, on the other hand, a rotor of the low-pressure compressor.

2. The turbomachine (10) according to claim 1, wherein the electric machine (62, 62') is located upstream from the low-pressure compressor (20).

3. The turbomachine (10) according to claim 1, wherein the electric machine (62) is located downstream from the low-pressure compressor (20).

4. The turbomachine (10) according to any one of claims 1 to 3, wherein the electric machine (62, 62') comprises a stator (62b) that surrounds its rotor (62a) and is configured to be cooled by said primary flow (36).

5. The turbomachine (10) according to claim 1, wherein said intermediate shaft (90) comprises adjacent sections (90a, 90b) intended to be surrounded, respectively, by a trunnion (88) of the rotor of the low-pressure compressor (20) and, either by a component (94) connected to or secured to the rotor (62a) of the electric machine (62), or by a part (126) connected to or secured to the stator (62b) of the electric machine (62'), said intermediate shaft comprising external splines for coupling to the trunnion and to the component (94) or to the part (126).

6. The turbomachine (10) according to claim 1, wherein said trunnion (88), on the one hand, and said component (94) or said part (126), on the other hand, are axially clamped against one another and onto a cylindrical shoulder (90d) of said intermediate shaft (90) by a nut (96) added to and screwed onto said intermediate shaft.

7. The turbomachine (10) according to one of claims 5 or 6, wherein the fan (14) is driven by the rotor of the low-pressure body (12a) via a reduction gear (33), the electric machine (62, 62') being located downstream of the reduction gear, which comprises an input shaft (56), a downstream end of which is engaged with an upstream end of the rotor of the low-pressure body (12a) and is axially clamped against said intermediate shaft (90) by a nut (92) added to and secured on said upstream end.

8. A method for the modular assembly of a turbomachine (10) according to one of the preceding claims, comprising the steps of:
a) mounting and securing the rotor (62a) of the electric machine (62, 62') and the rotor of the low-pressure compressor (20) onto said intermediate shaft (90) by axial translation, and
b) mounting and securing said intermediate shaft (90) to the rotor of the low-pressure body (12a) by axial translation.

9. The method according to the preceding claim, wherein the turbomachine (10) is as defined in claim 8, comprising an additional step consisting of:
c) mounting and securing the input shaft (56) of the reduction gear (33) to the rotor of the low-pressure body (12a) by axial translation.
